# FASCICULE DE BREVET EUROPEEN

(11) **EP 4 295 670 B1**
(45) Date de publication et mention de la délivrance du brevet: **30.04.2025**
(21) Numéro de dépôt: 23180538.3
(22) Date de dépôt: 21.06.2023
(51) Int. Cl.: A01G 13/06, F16L 3/12, F16B 2/10, F16L 3/00

(54) **DISPOSITIF DE FIXATION D'UNE CANNE D'ARROSAGE POUR L'IRRIGATION DE CULTURES ARBORICOLES**
VORRICHTUNG ZUR BEFESTIGUNG EINES BEWÄSSERUNGSROHRS FÜR DIE BEWÄSSERUNG VON OBSTPFLANZEN
DEVICE FOR FIXING A IRRIGATION CANE FOR IRRIGATING TREE CROPS

(30) Priorité: 21.06.2022 FR 2206103
(43) Date de publication de la demande: 27.12.2023
(73) Titulaire: Design and Print 3D, 82700 Finhan (FR)
(72) Inventeur: GOUDY, Sébastien, 82700 FINHAN (FR)
(74) Mandataire: BARRE LAFORGUE

(56) Documents cités:
- KR-A- 20180 131 930
- US-A- 5 024 405
- US-A- 5 474 268
- MJNVSADMIN1: "Sprinklers as Frost Protection", 18 August 2010 (2010-08-18), XP093013321, Retrieved from the Internet <URL:https://www.youtube.com/watch?v=SlMag1U4FLY&ab_channel=mjnvsadmin1> [retrieved on 20230112]

## Description

### [Domaine technique]

L'invention concerne un dispositif de fixation d'une canne d'arrosage sur un support filiforme tel qu'un fil de fer ou un anneau solidaire d'un piquet, la canne d'arrosage étant utilisée comme une réhausse d'un arroseur. Plus largement, l'invention s'inscrit dans le domaine de l'agriculture et plus particulièrement de l'arboriculture. En effet, l'invention se rapporte également à un système et un procédé d'irrigation de culture arboricole. L'invention s'applique notamment à l'irrigation antigel de culture arboricole telle que l'arboriculture fruitière.

### [État de la technique antérieure]

De manière générale dans les zones géographiques chaudes, l'arrosage des vergers est typiquement effectué par le pied des arbres via un goutte à goutte ou via un arroseur multi-jets qui s'élève à environ 30 à 40 cm du sol.

Néanmoins, cette solution n'est pas appropriée dans les zones géographiques qui présentent des températures ambiantes négatives pendant la période de floraison. Dans l'hémisphère nord, la période de floraison s'étend généralement entre les mois de mars et mai selon la latitude de chaque région. Or, ces gelées dites printanières sont problématiques dans la mesure où elles impactent lourdement les rendements de production en détruisant les fleurs et/ou les bourgeons émergeants sur les arbres fruitiers.

A l'heure actuelle, afin de prévenir les gelées, l'aspersion antigel est la solution la plus écologique connue et utilisée par les agriculteurs. L'aspersion antigel consiste à arroser les arbres fruitiers avec des microgouttelettes qui sont projetées au-dessus de la cime des arbres fruitiers. En pratique, ces gouttelettes sont projetées par des arroseurs de type « *sprinkler* »*,* dont le déclanchement peut être effectué manuellement ou automatiquement selon les prévisions et/ou les conditions météorologiques.

En pratique, un système d'aspersion antigel comporte notamment une sonde de température, une électrovanne qui alimente un réseau d'aspersion antigel et un nombre déterminé d'arroseurs automatiques qui sont connectés au réseau d'aspersion antigel, chaque arroseur automatique étant surélevé au-dessus de la cime des arbres par une canne d'arrosage.

Ainsi, lorsque la température descend en dessous d'un seuil déterminé par exemple 1°C, la sonde de température active directement ou indirectement l'électrovanne qui alimente alors le réseau d'aspersion antigel. Les arroseurs projettent alors des microgouttelettes d'eau sur les arbres.

Lorsque l'eau qui se trouve à la surface des fleurs ou des bourgeons gèle, le changement de phase liquide-solide de l'eau entraine un dégagement de chaleur. Ce phénomène exothermique de transition de phase de l'eau qui se transforme en glace libère des calories qui protègent du gel le bourgeon ou la fleur autour desquels l'eau s'est transformée en glace. En règle générale, un arrosage continu est ensuite maintenu jusqu'à ce que la température remonte et que les arbres dégèlent complètement.

Pour que l'aspersion antigel soit efficace, chaque arbre doit être arrosé suffisamment afin que l'eau se dépose sur la plupart des fleurs et bourgeons que l'arbre porte. Si la projection d'eau est légèrement déviée, les bourgeons, les fleurs et même l'arbre qui les portent peuvent geler. En conséquence, les agriculteurs positionnent de manière précise chaque canne afin que l'arroseur asperge chaque arbre de manière adéquate.

Cependant, le réseau d'aspersion antigel conduit de l'eau à une pression généralement comprise entre de l'ordre de 0,5 bar et de l'ordre de 7 bars, typiquement de l'ordre de 5 bars. Cette pression, notamment lors de la mise en eau, génère des vibrations au niveau des cannes d'arrosage qui ont pour première conséquence de dévier le flux d'eau projeté par les arroseurs.

Pour répondre à cette problématique, les agriculteurs ont développé des solutions rudimentaires afin de maintenir les cannes d'arrosage en position optimale pour réaliser l'aspersion antigel.

En premier lieu, les cannes d'arrosage peuvent être fixées aux fils de la rangée d'arbre, dits fils de rangée. Ledit fil de rangée est classiquement un fil de fer tendu le long de la rangée d'arbres et qui est utilisé dans certaines cultures arboricoles et peut avoir diverses fonctions telles que l'amarrage des arbres. Par ailleurs, trois fils disposés à différentes hauteurs permettent la croissance de l'arbre selon un axe sensiblement vertical. En pratique, une canne d'arrosage peut être attachée à l'un des fils de la rangée à l'aide d'un bout de fil de fer qui enserre à la fois une section transversale de la canne et ledit fil de rangée. Les rangées de culture peuvent également comprendre des piquets qui peuvent servir par exemple à tendre ledit fil de rangée et/ou soutenir des filets pare-grêles. Les agriculteurs peuvent ainsi utiliser ces piquets comme supports pour attacher une canne d'arrosage. Une nouvelle fois un bout de fil de fer peut attacher directement la canne d'arrosage au piquet, ou alors le fil de fer peut être attaché à un œillet ou anneau lui-même solidaire du piquet. Le fil de fer doit être suffisamment serré pour que la canne d'arrosage ne se déplace pas sous l'effet des vibrations. Or, une attache au fil de fer ne permet pas de tenir correctement la canne d'arrosage, l'attache descendant au fil du temps notamment sous l'effet des vibrations générées par la pression d'eau circulant dans les cannes d'arrosage. Dans ce contexte, une attache au fil de fer contraint l'agriculteur à réajuster régulièrement la hauteur de l'attache. En outre, lorsque les arbres croissent, il convient de rehausser la position des attaches, ce qui implique, d'une part, de repositionner les attaches par rapport aux fils de la rangée, et d'autre part, de remonter les attaches des cannes d'arrosage sur ledit fil de rangée le plus adapté.

Les cannes d'arrosage sont réalisées en aluminium qui, contrairement au fer ou à l'acier, est un matériau métallique léger qui ne craint ni le gel ni les canicules. Cependant, l'aluminium accepte difficilement les soudures du fait de sa conductivité, en effet, ce métal absorbe la chaleur qu'il propage aux alentours, ce qui pose problème car le point de fusion de ce métal est bas, et ne permet pas de réaliser des soudures à froid. En outre, l'aluminium se fragilise en chauffant lors de la soudure. Par ailleurs, la canne d'arrosage présente une épaisseur d'environ 1mm, en conséquence, si l'on parvient malgré tout à souder une attache sur la canne d'arrosage, le point de soudure réduit la résistance mécanique de la canne d'arrosage qui est alors susceptible de se rompre en cas de vent violent ce qui peut arriver lors d'une tempête.

Le document US2002/0189160 décrit un dispositif de fixation d'un arroseur basse pression, alimenté en eau par un tuyau d'arrosage flexible. Ce système d'arrosage fonctionne selon une pression hydraulique faible. Le dispositif de fixation est configuré pour être fixé sur un premier fil de rangée qui s'étend au plus haut d'une culture. Pour cela, le dispositif de fixation comporte un premier support pour l'arroseur qui présente une fente qui est enfilée sur le premier fil de rangée, le premier support comportant une ouverture permettant la connexion entre le tuyau d'arrosage flexible et l'arroseur. Le dispositif de fixation comporte un second support qui est positionné inférieurement au premier support. Les deux supports sont reliés entre eux par une tringle télescopique. Le second support est destiné à être positionné sur un fil de rangée inférieur par rapport au premier fil de rangée. Le second support est équipé d'une bague dans laquelle passe le tuyau flexible. Ce dispositif de fixation ne permet pas de fixer une canne d'arrosage rigide qui réhausse un arroseur du type « sprinkler » avec une pression hydraulique élevée pouvant atteindre de l'ordre de 7 bars. D'une part, le dispositif de fixation de US2002/0189160 n'est pas adapté pour solidariser une canne d'arrosage solide au support filiforme que ce soit un fil de rangée ou un anneau solidaire d'un piquet, et d'autre part, n'est pas conçu pour pallier les inconvénients engendrés par des fortes pressions qui sont sources de vibrations de la canne d'arrosage.

US 5 474 268 A illustre un dispositif alternatif de fixation d'une canne d'arrosage pour l'irrigation de cultures arboricoles.

L'invention vise à pallier l'ensemble de ces inconvénients. Elle vise également à pallier les inconvénients des systèmes d'arrosage de l'art antérieur.

### [Exposé de l'invention]

L'invention vise à fournir un support de fixation sur un support filiforme pour une canne d'arrosage à pression hydraulique qui réhausse un arroseur -notamment un arroseur automatique-, le dispositif de fixation permettant de maintenir la canne d'arrosage malgré les vibrations générées par la pression hydraulique.

À cet effet, la présente invention concerne un dispositif de fixation d'une canne d'arrosage pour l'irrigation de cultures arboricoles selon la revendication 1, la canne d'arrosage correspondant à une réhausse d'un arroseur sur un support filiforme tel qu'un fil de fer ou un anneau, le dispositif de fixation comportant :
- une embase,
- une bride configurée pour enserrer la canne d'arrosage de l'arroseur, la bride comporte deux mâchoires qui s'étendent respectivement depuis l'embase jusqu'à une extrémité libre portant des moyens de connexion des deux mâchoires entre elles,
   et
- une extension de fixation qui s'étend longitudinalement, dans une direction opposée aux mâchoires, entre l'embase et un bord libre, l'extension de fixation comportant une rainure de réception configurée pour réceptionner et bloquer une portion du support filiforme.

L'embase porte ainsi une bride qui enserre la canne d'arrosage alors que l'extension de fixation est configurée pour attacher et bloquer le dispositif de fixation au support filiforme et ce malgré les vibrations de la canne d'arrosage. Les moyens de connexion de la bride permettent le déplacement du dispositif de fixation sur la canne d'arrosage en rapport avec la croissance des arbres. En effet, le support filiforme est souvent rehaussé au fur et à mesure de la croissance des arbres.

L'invention se caractérise en ce que l'extension de fixation comporte, d'une part, un appendice saillant de l'embase et disposé à une jonction entre la bride et l'extension de fixation, et d'autre part, une patte de blocage qui s'étend selon une direction parallèle de l'appendice, l'appendice et la patte de blocage formant la rainure de réception. La rainure de réception qui est ménagée sur l'embase à l'interface entre la bride et l'extension de fixation permet d'améliorer la résistance.

De plus, l'invention se caractérise aussi en ce que l'appendice comporte une première paroi formant la rainure réception et présentant une courbure de profil convexe selon au moins un axe. Cette courbure confère à ladite première paroi un caractère bombé qui aide à bloquer le support filiforme au sein de la rainure de réception.

Dans des modes de réalisation, l'appendice peut comporter une seconde paroi qui présente un profil concave et prolonge une paroi interne de la bride. Cette caractéristique permet de renforcer l'enserrement de la canne d'arrosage et ainsi de limiter les vibrations de cette dernière.

Dans des modes de réalisation, la patte de blocage s'étend longitudinalement depuis une base solidaire de l'extension de fixation jusqu'à un bout libre, la patte de blocage dispose d'un corps cylindrique qui présente au moins une portion dont une section transversale est décroissante en direction du bout libre.

La patte de fixation est ainsi profilée à son bout libre ce qui facilite l'emboitement de la rainure de réception sur le support filiforme.

Dans des modes de réalisation, l'extension de fixation comprend un réceptacle recevant la base de la patte de fixation, d'une part, le réceptacle est équipé d'un receveur à baïonnette qui comprend un système anti-déblocage, et d'autre part, la base de la patte de fixation qui est équipée de deux ergots configurés pour coopérer avec le receveur à baïonnette. Dans ces modes de réalisation, le système anti-déblocage permet de bloquer la patte de fixation en évitant son déboitement et de maintenir solidairement le système de fixation. En outre, la patte de fixation est ainsi conformée pour faciliter son emboitement sur la canne d'arrosage. Elle forme également un contrepoids de l'embase du dispositif de fixation.

Dans des modes de réalisation, la rainure de réception présente une section transversale en forme de V. La forme en V de la rainure de réception permet d'améliorer le blocage du support filiforme au fond de la rainure de réception.

Dans des modes de réalisation, le dispositif de fixation comporte une structure de renforcement de chaque mâchoire. L'insertion de la mâchoire sur une canne d'arrosage se fait en force par déformation élastique de chaque mâchoire, la structure de renforcement permet d'éviter que les mâchoires ne soient endommagées lorsque la bride est positionnée sur la canne d'arrosage.

Dans des modes de réalisation, chaque mâchoire comprend au moins un épaulement de blocage afin de bloquer la bride dans une position fixe sur la canne d'arrosage. L'épaulement de blocage augmente la pression qu'exerce la bride sur la canne d'arrosage.

L'invention se rapporte également à un système d'irrigation de culture arboricole comportant :
- un nombre déterminé d'arroseurs disposés en surplomb de la cime des arbres de la culture arboricole,
- un nombre déterminé de cannes d'arrosage, chaque canne d'arrosage réhausse un arroseur au-dessus de la cime des arbres, et
- un nombre déterminé de dispositifs de fixation conformes de l'invention, chaque dispositif de fixation permet de solidariser une canne d'arrosage à au moins un support filiforme tel qu'un fil de fer ou un anneau lui-même solidaire d'un piquet de culture.

L'invention concerne aussi un procédé d'irrigation de culture arboricole selon la revendication 9 comprenant les étapes suivantes :
- Rehausser un nombre déterminé d'arroseurs en surplomb de la cime des arbres, chaque arroseur étant réhaussé par une canne d'arrosage, et
- Solidariser les cannes d'arrosage à au moins un support filiforme tel qu'un fil de fer ou un anneau solidaire d'un piquet, chaque canne d'arrosage étant solidarisée à un au moins un support filiforme par un nombre déterminé de dispositifs de fixation conformes de l'invention.

Le procédé et le système d'irrigation présentent les mêmes avantages que le dispositif de fixation qu'ils intègrent respectivement.

### [Description des dessins]

D'autres caractéristiques et avantages de l'invention apparaîtront encore à la lecture de la description qui va suivre. Celle-ci est purement illustrative et doit être lue en regard des dessins annexés sur lesquels :
[Fig 1] est une représentation en perspective d'un dispositif de fixation conforme d'un mode de réalisation de l'invention, le dispositif de fixation attachant une canne d'arrosage à un fil de rangée de culture.
[Fig 2] est une représentation de côté d'un dispositif de fixation conforme d'un mode de réalisation de l'invention, le dispositif de fixation attachant une canne d'arrosage à un anneau qui est solidaire d'un piquet de culture.
[Fig 3] est une représentation en vue éclatée du dispositif de fixation de la figure 1.
[Fig 4] est une représentation en perspective du dispositif de fixation de la figure 1.
[Fig 5] est une représentation d'une vue éclatée du dispositif de fixation de la figure 2.
[Fig 6] est une représentation d'une vue en perspective du dispositif de fixation de la figure 2.
[Fig 7] est une représentation d'une vue de dessus du dispositif de fixation de la figure 2.

### [Description des modes de réalisation]

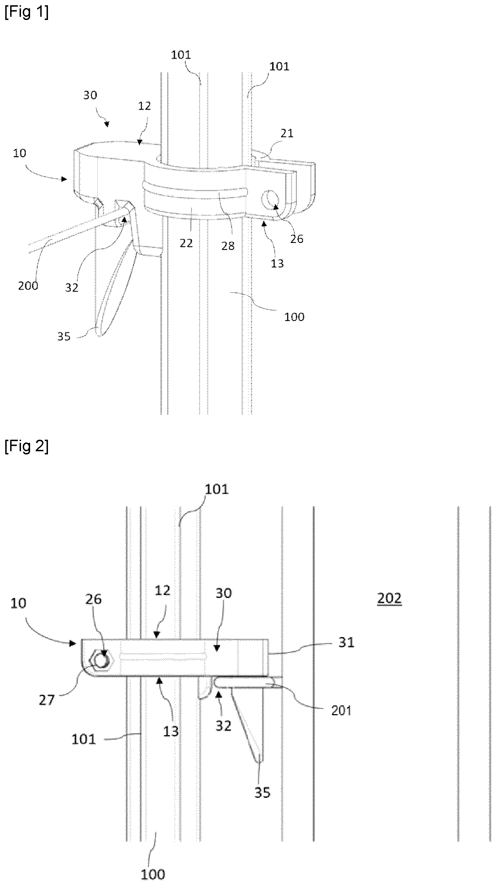

En référence aux figures 1 à 7, la présente invention concerne un dispositif de fixation 10 d'une canne d'arrosage 100 utilisée comme une réhausse d'un arroseur -notamment d'un arroseur automatique- de type « sprinkler ». Le dispositif de fixation 10 permet notamment d'attacher des cannes d'arrosage 100 dans le cadre l'irrigation de cultures arboricoles. En particulier, la canne d'arrosage 100 s'intègre dans un système d'irrigation de culture arboricole qui est également objet de la présente invention.

Dans ce contexte, la canne d'arrosage 100 présente deux fonctions, d'une part, la canne d'arrosage 100 réhausse l'arroseur (« *sprinkler* ») au-dessus de la cime des arbres afin d'optimiser la projection des gouttelettes -notamment des microgouttelettes-d'eau, et d'autre part, la canne d'arrosage 100 permet de connecter l'arroseur à un réseau d'irrigation ou d'aspersion antigel qui s'étend, par exemple, au niveau du sol d'une rangée de culture.

Comme illustré aux figures 1 et 2, le dispositif de fixation 10 attache la canne d'arrosage 100 à un support filiforme 200 ou à un œillet 201 d'un piquet 202. Dans cet exemple, la canne d'arrosage 100 possède des cannelures 101. Néanmoins, la canne d'arrosage 100 peut être également lisse et présenter une section transversale circulaire. Dans l'exemple de la figure 1, le support filiforme est constitué par un fil de rangée de culture 200. Le fil de rangée de culture 200 peut correspondre à un fil de palissage qui s'étend d'un bout à l'autre la rangée de culture.

Dans l'exemple de la figure 2, le support filiforme est constitué par un anneau 201 lui-même solidaire d'un piquet 202. Le piquet 202 peut être spécifiquement planté pour supporter un ou plusieurs anneaux 201 en vue de supporter un dispositif de fixation 10. Cependant, le piquet 202 peut également supporter un fil de rangée tel que décrit précédemment. Le piquet 202 peut aussi contribuer à soutenir au moins un filet pare-grêle.

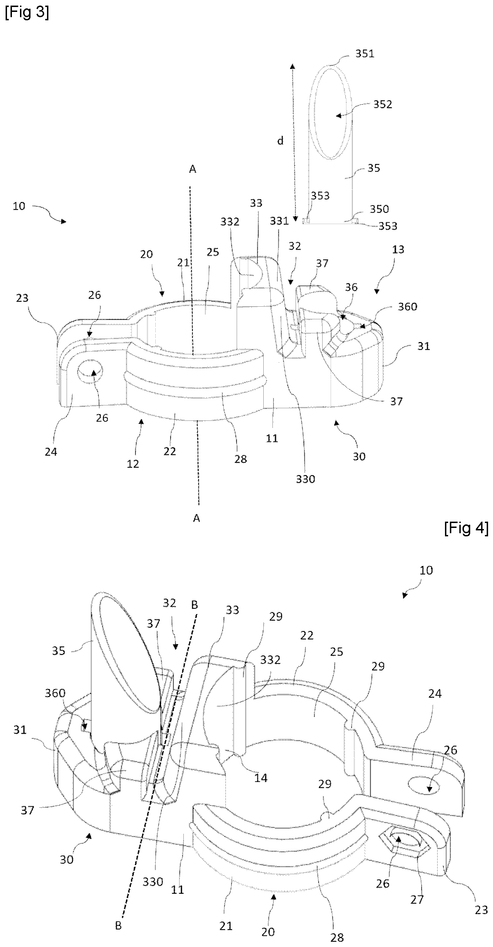

Comme illustré aux figures 3 à 6, le dispositif de fixation 10 comprend une première face 12 et une seconde face 13. La première face 12 est orientée vers le haut aux figures 1 et 2, alors que la seconde face 13 est orientée vers le bas. Dans un mode de réalisation, la seconde face 13 est technique et permet de fixer le dispositif sur un support filiforme 200,201. La première face 12 est quant à elle lisse. En outre, le dispositif de fixation 10 comprend une embase 11 mais aussi une bride 20 et une extension de fixation 30 qui s'étendent respectivement depuis l'embase 11.

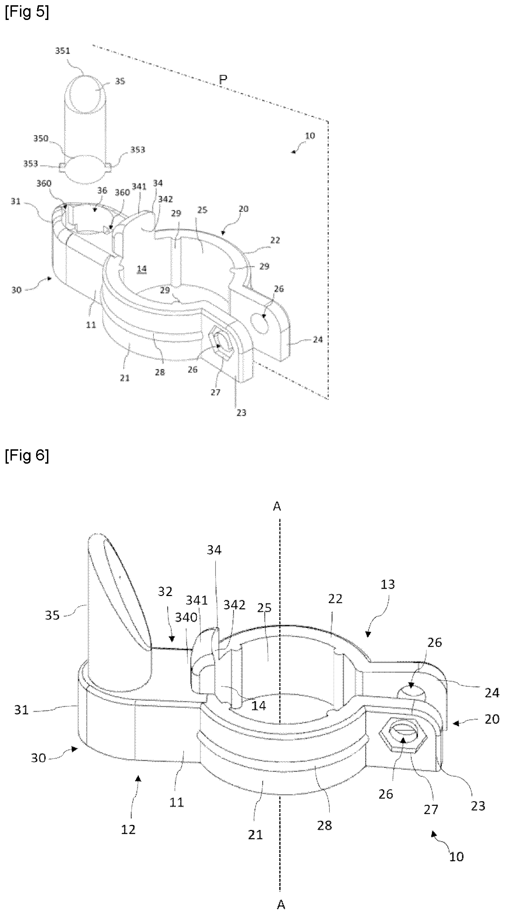

Dans cet exemple la bride 20 configurée pour enserrer la canne d'arrosage 100 de l'arroseur. Pour cela, la bride 20 comporte deux mâchoires 21, 22 qui s'étendent respectivement depuis l'embase 11 jusqu'à une extrémité libre 23, 24. Dans cet exemple, chaque mâchoire 21, 22 s'étend de manière courbe. Les deux mâchoires 21, 22 s'étendent autour d'un axe central A-A visible aux figures 3 et 6. En particulier, l'embase 11 comporte une paroi interne 14 (telle que représentée en figure 5) qui définit avec une paroi interne 25 de chaque mâchoire 21, 22 une surface de serrage avec laquelle la bride 20 enserre la canne d'arrosage 100. La bride 20 peut présenter un diamètre interne compris entre 30 mm et 100 mm. Néanmoins, en fonction du diamètre des cannes d'arrosage 100, le diamètre interne de la bride 20 peut être différent de ces valeurs.

Chaque extrémité libre 23, 24 est constituée par une excroissance définissant une oreille. Comme illustré aux figures 2 à 6, chaque oreille porte des moyens de connexion 26, 27 qui permet de solidariser les deux mâchoires 21, 22 entre elles. Dans cet exemple, les moyens de connexion comportent un perçage 26 ménagé sur l'oreille de chaque extrémité libre 23, 24.

Comme cela est visible aux figures 2 et 4 à 6, les moyens de connexion peuvent comporter une empreinte 27 ménagée dans l'oreille d'une extrémité 23 autour du perçage 26. L'empreinte 27 permet d'optimiser le serrage d'une tête de vis ou d'une tête de boulon dont la forme et les dimensions sont complémentaires de l'empreinte 27. Ici, l'empreinte 27 présente une forme d'hexagone. Dans cet exemple, une première mâchoire 22 porte un perçage 26 autour duquel est disposée une empreinte 27. La seconde mâchoire 23 comporte à son extrémité 24 un perçage 26 simple.

Dans un mode de réalisation, le dispositif de fixation 10 peut aussi comprendre une structure de renforcement 28 de chaque mâchoire 21, 22. Cette structure de renforcement 28 est notamment visible aux figures 3 et 5. En particulier, la structure de renforcement 28 s'étend sur une paroi externe de chaque mâchoire 21, 22. Ici, la structure de renforcement 28 s'étend selon un axe longitudinal définit entre l'embase 11 et l'extrémité 23, 24 de chaque mâchoire 21, 22. Ledit axe longitudinal peut être médian et transversal de la paroi de chaque mâchoire 21, 22. Comme illustré aux figures 3 et 5, la structure de renforcement est ici constituée par un bourrelé saillant de la paroi externe de chaque mâchoire 21, 22.

Dans un mode de réalisation particulièrement visible aux figures 4 et 5, chaque mâchoire 21, 22 comprend au moins un épaulement de blocage 29. L'épaulement de blocage 29 est disposé sur la paroi interne 25 d'une mâchoire 21, 22. L'épaulement de blocage 29 s'étend longitudinalement sur toute la hauteur d'une mâchoire 21, 22. La hauteur d'une mâchoire 21, 22 est définie par la distance entre chaque chanfrein de la mâchoire 21, 22. Dans l'exemple illustré aux figures 4 et 5, chaque mâchoire 21, 22 comporte deux épaulements de blocage 29. Ici, les épaulements de blocage 29 des deux mâchoires sont disposés de manière symétrique par rapport à un plan de symétrie P qui est transversal et médian du dispositif de fixation 10 (voir figure 5). Les épaulements de blocage 29 augmentent la pression de serrage de la bride 20 la canne d'arrosage 100. Les épaulements de blocage 29 sont d'autant plus efficaces lorsque la canne d'arrosage 100 est cannelée comme cela est illustré aux figures 1 et 2.

Comme illustré aux figures 1 à 7, l'extension de fixation 30 du dispositif de fixation 10 s'étend longitudinalement dans une direction opposée aux mâchoires 21, 22. Dans cet exemple, l'extension de fixation s'étend entre l'embase 11 et un bord libre 31. Ici, le bord libre 31 présente une forme arrondie, toutefois, toutes autres formes pourraient être envisagées. L'extension de fixation 30 permet d'accrocher le dispositif de fixation 10 à un support filiforme 200,201 comme cela est illustré aux figures 1 et 2. À ces fins, l'extension de fixation 30 comporte une rainure de réception 32 configurée pour réceptionner et bloquer une portion du support filiforme 200,201. La rainure de réception 52 est disposée sur la seconde face 13 du dispositif de fixation 10.

Comme cela est plus particulièrement visible aux figures 3 et 6, l'extension de fixation 30 comporte un appendice 33, 34 qui est saillant depuis la seconde face 13 de l'embase 11. L'appendice 33, 34 est disposé sur l'embase 11 à une jonction entre la bride 20 et l'extension de fixation 30. L'appendice 33, 34 s'étend de manière perpendiculaire à l'axe dans lequel s'étend l'extension de fixation 30. En particulier, l'appendice 33, 34 s'étend dans une direction parallèle de l'axe central A-A de la bride 20. L'extension de fixation 30 comprend également une patte de blocage 35 comme cela est visible aux figures 1 à 6. La patte de blocage 35 s'étend longitudinalement selon une direction parallèle de l'appendice 33, 34.

Plus particulièrement, la patte de blocage 35 s'étend longitudinalement selon une distance d depuis une base 350 solidaire de l'extension de fixation 30 jusqu'à un bout libre 351 (voir figure 3). La distance d correspond à la hauteur de la patte de blocage 35. La distance d peut mesurer entre 40 et 100 mm. Dans le présent exemple, la patte de blocage 35 dispose d'un corps cylindrique qui a une section transversale décroissante depuis sa base 350 jusqu'à son bout libre 351. En effet, le corps cylindrique de la patte de blocage 35 comporte notamment une portion profilée 352 qui s'étend depuis la mihauteur de la patte de blocage 35 jusqu'à son bout libre 351. Le profilage de la patte de blocage 35 facilite l'installation du dispositif de fixation 10 sur un support filiforme 200,201 qui peut se trouver à une hauteur élevée du sol par exemple entre 2 et 5 m de haut par rapport au sol. Le profilage guide l'insertion du support filiforme 200,201 dans la rainure de réception 32. En effet, l'appendice 33, 34 et la patte de blocage 35 coopèrent pour former la rainure de réception 32 du support filiforme. Plus particulièrement, comme cela est visible aux figures 4 et 6, la portion cylindrique de la patte de blocage 35 forme avec l'appendice 33, 34 la rainure de réception 52.

Dans l'exemple illustré aux figures 3, 5 et 7, l'extension de fixation 30 comprend un réceptacle 36 recevant la base 350 de la patte de fixation 35. Le réceptacle 36 est en fait un perçage borgne qui est ménagé dans l'extension de fixation 30 entre la rainure de réception 32 et le bout libre 31. Le réceptacle 36 est ouvert au niveau de la seconde face 13 du dispositif de fixation 10.

Dans cet exemple, le réceptacle 36 est équipé d'un receveur à baïonnette. De manière classique le receveur à baïonnette comporte deux fentes d'insertion 360 et un cran de blocage radial disposé au bas de chaque fente d'insertion 360. Les fentes d'insertion 360 sont diamétralement opposées l'une de l'autre. De plus, le receveur à baïonnette comprend un système anti-déblocage. Le système anti-déblocage est constitué par des crans de blocages adaptés pour recevoir des ergots 353 de la patte 35 de fixation et pour coopérer avec les ergots 353 de la patte 35 de fixation en verrouillant la patte 35 de blocage dans le réceptacle 36 sous l'effet inverse (à l'encontre) de la rotation de la canne 100 d'arrosage portant l'arroseur.

En parallèle, la base 350 de la patte de fixation 35 peut être équipée de deux ergots 353 configurés pour coopérer avec le receveur à baïonnette. Les deux ergots 353 sont diamétralement opposés l'un de l'autre. Ainsi, la patte de blocage 35 est insérée dans le réceptacle 36 par insertion de sa base 350 et des ergots respectivement dans le réceptacle 36 et les deux fentes d'insertion 360.

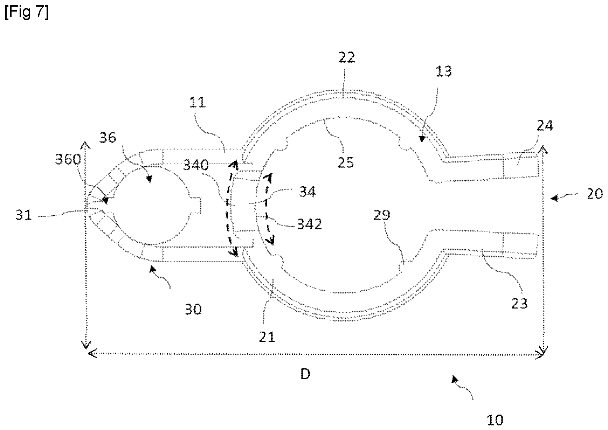

Comme illustré aux figures 3 et 6, l'appendice 33, 34 peut comporter une première paroi 330, 340 qui forme la rainure réception 32. Cette première paroi 330, 340 présente une courbure de profil convexe selon au moins un axe. Dans l'exemple de la figure 7, la première paroi 340 est convexe selon un axe transversal par rapport à la direction dans laquelle s'étend l'extension de fixation 30. Cette convexité est représentée par une double flèche courbe qui épouse le contour bombé de la première paroi 340. Il est à noter que les dispositifs de fixation 10 représentés aux autres figures peuvent présenter une première paroi 330, 340 qui présente également cette convexité. Le caractère convexe de la première paroi 330, 340 permet de bloquer le support filiforme 200,201 au sein de la rainure de réception 32.

Il est à noter que la portion supérieure 331, 341 la première paroi 330, 340 de chaque appendice 33, 34 peut être convexe selon un axe perpendiculaire dudit axe transversale de la première paroi 330, 340 (voir notamment figures 3, 5 et 6). Cette convexité permet de guider le support filiforme 200,201 vers la rainure de réception 32 lorsqu'un opérateur attache la canne d'arrosage 100.

Comme illustré aux figures 3 à 7, l'appendice 33, 34 comportant une seconde paroi 332, 342 présente un profil concave. La seconde paroi 332, 342 est opposée de la première paroi 330, 340. Comme cela est visible aux figures 4 et 5 la seconde paroi 332, 442 prolonge la paroi interne 25 de la bride 20. La seconde paroi 332, 342 permet d'augmenter la surface de contact avec la canne d'arrosage 100 et ainsi de réduire les vibrations de la canne d'arrosage 100. Les premières parois 330,340 favorisent le maintien dudit fil de rangée 200 dans la rainure 32 de réception lors de la mise en eau. Par ailleurs, les secondes paroi 332,342 sont adaptées pour pouvoir limiter l'oscillation de la canne par rapport au dispositif 10 de fixation qui serait de nature à permettre la sortie du fils de rangée hors de la rainure 32 de réception.

Dans l'exemple des figures 2 à 4, la rainure de réception 32 présente une section transversale en forme de V. Ce mode de réalisation est plus particulièrement adapté pour attacher le dispositif de fixation 10 à un support filiforme 200,201. Pour cela, l'extension de fixation 30 comporte deux pièces de renfort 37 qui sont disposées au bord de la rainure de réception 32 de part et d'autre du réceptacle 36. Les deux pièces de renfort 37 sont alignées au bord de la rainure de réception 32 selon un axe parallèle de l'axe B, B selon lequel s'étend la rainure de réception 32 (voir figure 4). Chaque pièce de renfort 37 présente une paroi interne qui s'étend sur le bord de la rainure de réception 32 et coopère avec l'appendice 33 et la patte de blocage 35 pour former la rainure de réception 32. En outre, chaque pièce de renfort 37 comprend une paroi courbe configurée pour épouser le corps cylindrique de la patte de blocage 35.

Dans l'exemple des figures 5 à 7, le dispositif de fixation 10 comporte une rainure de réception 32 plus large que la rainure de réception 32 du dispositif 10 des figures 2 à 4, afin d'être adaptée à recevoir un support filiforme de type anneau.

Dans l'exemple illustré à la figure 7, le dispositif de fixation 10 s'étend depuis les extrémités 23, 24 de chaque mâchoire 21, 22 jusqu'au bout libre 31 de l'extension 30 selon une distance D qui peut être comprise entre 60 mm et 200 mm. Toutefois, la distance D peut être différente en fonction des dimensions des cannes d'arrosage que le dispositif de fixation 10 doit fixer au support filiforme.

L'invention concerne également un système d'irrigation de culture arboricole. En particulier, le système d'irrigation peut être un système d'irrigation antigel. Le système d'irrigation comporte un nombre déterminé d'arroseurs disposés en surplomb de la cime des arbres de la culture arboricole. Dans ce cas, l'arroseur est de type « *sprinkler* » et est capable de projeter des gouttelettes d'eau.

Le système d'irrigation comprend un nombre déterminé de cannes d'arrosage. Le nombre de cannes d'arrosage dépend des dimensions du verger et du nombre d'arbres que l'on souhaite irriguer et/ou protéger du gel en fonction de la saison. En pratique, chaque canne d'arrosage réhausse un arroseur au-dessus de la cime des arbres du verger.

Le système d'irrigation comprend un nombre déterminé de dispositifs de fixation 10 conforme de l'invention. En particulier, chaque canne d'arrosage 100 peut être attachée à différentes hauteurs à un support filiforme 200,201, ceci pour limiter les vibrations dues à la pression hydraulique de l'eau qu'elle véhicule vers les arroseurs. Par exemple, une canne d'arrosage peut être attachée par trois dispositifs de fixation qui sont respectivement reliés à un support filiforme disposé à une hauteur définie du sol. Ainsi, chaque dispositif de fixation 10 permet de solidariser une canne d'arrosage 100 à au moins un support filiforme tel qu'un fil de fer ou un anneau lui-même solidaire d'un piquet de culture.

L'invention concerne également à un procédé d'irrigation de culture arboricole. Le procédé d'irrigation peut aussi être appliqué à un procédé d'irrigation antigel. Rien n'empêche cependant de prévoir d'appliquer le procédé d'irrigation selon l'invention en lieu et place ou en complément d'un procédé d'irrigation antigel.

Le procédé d'irrigation comprend une étape de réhausse d'un nombre déterminé d'arroseurs en surplomb de la cime des arbres. En particulier, chaque arroseur est réhaussé par une canne d'arrosage 100.

Le procédé d'irrigation comporte également une étape de solidarisation des cannes d'arrosage à au moins un support filiforme tel qu'un fil de fer ou un anneau solidaire d'un piquet. Chaque canne d'arrosage 100 est solidarisée à un au moins un support filiforme par un nombre déterminé de dispositifs de fixation 10 conforme de l'invention. Une canne d'arrosage 100 peut être solidarisée par plusieurs dispositifs de fixation 10 répartis à différentes hauteurs selon la disposition des supports filiformes 200,201 au sein de la culture arboricole.

## Revendications

1. Dispositif de fixation (10) d'une canne d'arrosage (100) pour l'irrigation de cultures arboricoles, la canne d'arrosage (100) correspondant à une réhausse d'un arroseur sur un support filiforme (200,201) tel qu'un fil de fer ou un anneau, le dispositif de fixation comportant :
- une embase (11),
- une bride (20) configurée pour enserrer la canne d'arrosage (100) de l'arroseur, la bride (20) comporte deux mâchoires (21, 22) qui s'étendent respectivement depuis l'embase (11) jusqu'à une extrémité libre (23, 24) portant des moyens connexion des deux mâchoires (21, 22) entre elles, et
une extension de fixation (30) qui s'étend longitudinalement, dans une direction opposée aux mâchoires (21, 22), entre l'embase (11) et un bord libre (31), l'extension de fixation (30) comportant une rainure de réception (32) configurée pour réceptionner et bloquer une portion du support filiforme (200,201),
**caractérisé en ce que**, l'extension de fixation (30) comporte, d'une part, un appendice (33, 34) saillant de l'embase (11) et disposé à une jonction entre la bride (20) et l'extension de fixation (30), et d'autre part, une patte de blocage (35) qui s'étend selon une direction parallèle de l'appendice (33, 34), l'appendice (33, 34) et la patte de blocage (35) formant la rainure de réception (32),
et **en ce que**, l'appendice (33, 34) comporte une première paroi (330, 340) formant la rainure réception (32) et présentant une courbure de profil convexe selon au moins un axe.

2. Dispositif de fixation (10) selon la revendication 1, dans lequel, l'appendice (33, 34) comportant une seconde paroi (332, 342) qui présente un profil concave et prolonge une paroi interne (25) de la bride (20).

3. Dispositif de fixation (10) selon l'une des revendications 1 et 2, dans lequel, la patte de blocage (35) s'étend longitudinalement depuis une base (350) solidaire de l'extension de fixation (30) jusqu'à un bout libre (351), la patte de blocage (35) dispose d'un corps cylindrique qui présente au moins une portion dont une section transversale est décroissante en direction du bout libre (351).

4. Dispositif de fixation (10) selon la revendication 3, dans lequel, l'extension de fixation (30) comprend un réceptacle (36) recevant la base (350) de la patte de fixation (35), d'une part, le réceptacle (36) est équipé d'un receveur à baïonnette qui comprend un système anti-déblocage, et d'autre part, la base (350) de la patte de fixation (35) qui est équipée de deux ergots (353) configurés pour coopérer avec le receveur à baïonnette.

5. Dispositif de fixation (10) selon l'une des revendications 1 à 4, dans lequel, la rainure de réception (32) présente une section transversale en forme de V.

6. Dispositif de fixation (10) selon l'une des revendications 1 à 5, qui comporte, une structure de renforcement (28) de chaque mâchoire (21, 22).

7. Dispositif de fixation (10) selon l'une des revendications 1 à 6, dans lequel, chaque mâchoire (21, 22) comprend au moins un épaulement de blocage (29) afin de bloquer la bride (20) dans une position fixe sur la canne d'arrosage (100).

8. Système d'irrigation de culture arboricole comportant :
- un nombre déterminé d'arroseurs disposés en surplomb de la cime des arbres de la culture arboricole,
- un nombre déterminé de cannes d'arrosage (100), chaque canne d'arrosage (100) réhausse un arroseur au-dessus de la cime des arbres, et
- un nombre déterminé de dispositifs de fixation (10) définis selon l'une des revendications 1 à 7, chaque dispositif de fixation (10) permet de solidariser une canne d'arrosage (100) à au moins un support filiforme (200,201) tel qu'un fil de fer ou un anneau lui-même solidaire d'un piquet de culture.

9. Procédé d'irrigation de culture arboricole comprenant les étapes suivantes :
- Rehausser un nombre déterminé d'arroseurs en surplomb de la cime des arbres, chaque arroseur étant réhaussé par une canne d'arrosage (100), et
- Solidariser les cannes d'arrosage (100) à au moins un support filiforme (200,201) tel qu'un fil de fer ou un anneau solidaire d'un piquet, chaque canne d'arrosage (100) étant solidarisée à un au moins un support filiforme (200,201) par un nombre déterminé de dispositifs de fixation (10) définis selon l'une des revendications 1 à 7.

## Patentansprüche

1. Befestigungsvorrichtung (10) eines Bewässerungsrohrs (100) für die Bewässerung von Obstpflanzen, wobei das Bewässerungsrohr (100) einer Erhöhung eines Sprinklers an einer fadenförmigen Halterung (200, 201), wie beispielsweise einem Draht oder einem Ring entspricht, die Befestigungsvorrichtung umfassend:
- eine Basis (11),
- einen Flansch (20), der konfiguriert ist, um das Bewässerungsrohr (100) des Sprinklers zu umschließen, wobei der Flansch (20) zwei Backen (21, 22) aufweist, die sich jeweils von der Basis (11) bis zu einem freien Ende (23, 24) erstrecken, das Einrichtungen trägt, die die zwei Backen (21, 22) miteinander verbinden, und
eine Befestigungserweiterung (30), die sich in Längsrichtung in einer Richtung entgegengesetzt zu den Backen (21, 22) zwischen der Basis (11) und einem freien Rand (31) erstreckt, wobei die Befestigungserweiterung (30) eine Aufnahmenut (32) umfasst, die konfiguriert ist, um einen Abschnitt der fadenförmigen Halterung (200, 201) aufzunehmen und zu verriegeln,
**dadurch gekennzeichnet, dass** die Befestigungserweiterung (30) einerseits einen Ansatz (33, 34), der von der Basis (11) hervorsteht und an einer Verbindung zwischen dem Flansch (20) und der Befestigungserweiterung (30) angeordnet ist, und andererseits eine Verriegelungslasche (35), die sich in einer Richtung parallel zu dem Ansatz (33, 34) erstreckt, wobei der Ansatz (33, 34) und die Verriegelungslasche (35) die Aufnahmenut (32) bilden, umfasst,
und dass der Ansatz (33, 34) eine erste Wand (330, 340) umfasst, die die Aufnahmenut (32) bildet und eine konvexe Profilkrümmung entlang mindestens einer Achse aufweist.

2. Befestigungsvorrichtung (10) nach Anspruch 1, wobei der Ansatz (33, 34) eine zweite Wand (332, 342) umfasst, die ein konkaves Profil aufweist und eine Innenwand (25) des Flanschs (20) verlängert.

3. Befestigungsvorrichtung (10) nach einem der Ansprüche 1 und 2, wobei sich die Verriegelungslasche (35) in Längsrichtung von einer mit der Befestigungserweiterung (30) fest verbundenen Basis (350) zu einem freien Ende (351) erstreckt, wobei die Verriegelungslasche (35) über einen zylindrischen Körper verfügt, der mindestens einen Abschnitt aufweist, dessen Querschnitt in Richtung des freien Endes (351) abnehmend ist.

4. Befestigungsvorrichtung (10) nach Anspruch 3, wobei die Befestigungserweiterung (30) einerseits eine Aufnahme (36) umfasst, die die Basis (350) der Befestigungslasche (35) aufnimmt, die Aufnahme (36) mit einer Bajonettaufnahme ausgestattet ist, die ein Entriegelungsschutzsystem umfasst, und andererseits die Basis (350) der Verriegelungslasche (35), die mit zwei Nasen (353) ausgestattet ist, die konfiguriert sind, um mit der Bajonettaufnahme zusammenzuwirken.

5. Befestigungsvorrichtung (10) nach einem der Ansprüche 1 bis 4, wobei die Aufnahmenut (32) einen V-förmigen Querschnitt aufweist.

6. Befestigungsvorrichtung (10) nach einem der Ansprüche 1 bis 5, die eine Verstärkungsstruktur (28) für jede Backe (21, 22) umfasst.

7. Befestigungsvorrichtung (10) nach einem der Ansprüche 1 bis 6, wobei jede Backe (21, 22) mindestens eine Verriegelungsschulter (29) umfasst, um den Flansch (20) in einer festen Position an dem Bewässerungsrohr (100) zu verriegeln.

8. Bewässerungssystem von Obstpflanzen, umfassend:
- eine bestimmte Anzahl von Sprinklern, die über den Baumkronen der Obstpflanzen angeordnet sind,
- eine bestimmte Anzahl von Bewässerungsrohren (100), wobei jedes Bewässerungsrohr (100) einen Sprinkler über die Baumkrone hinaus erhöht, und
- eine bestimmte Anzahl von Befestigungsvorrichtungen (10), die nach einem der Ansprüche 1 bis 7 definiert sind, wobei jede Befestigungsvorrichtung (10) es ermöglicht, ein Bewässerungsrohr (100) mit mindestens einer fadenförmigen Halterung (200, 201), wie beispielsweise einem Draht oder einem Ring, der seinerseits fest mit einem Pfahl verbunden ist, zu verbinden.

9. Bewässerungsverfahren von Obstpflanzen, umfassend die folgenden Schritte:
- Erhöhen einer bestimmten Anzahl von Sprinklern über die Baumkronen, wobei jeder Sprinkler von einem Bewässerungsrohr (100) erhöht wird, und
- Befestigen der Bewässerungsrohre (100) an mindestens einer fadenförmigen Halterung (200, 201), wie beispielsweise einem Draht oder einem Ring, der fest mit einem Pfahl verbunden ist, wobei jedes Bewässerungsrohr (100) durch eine bestimmte Anzahl von Befestigungsvorrichtungen (10), die nach einem der Ansprüche 1 bis 7 definiert sind, fest mit mindestens einer fadenförmigen Halterung (200, 201) verbunden ist.

## Claims

1. A device for fixing (10) an irrigation cane (100) for irrigating tree crops, the irrigation cane (100) corresponding to a riser of a sprinkler on a filamentary support (200,201) such as a wire or a ring, the device for fixing including:
- a base (11),
- a clamp (20) configured to enclose the irrigation cane (100) of the sprinkler, the clamp (20) includes two jaws (21, 22) extending respectively from the base (11) to a free end (23, 24) with means for connecting the two jaws (21, 22) together, and
a fixing extension (30) extending longitudinally, in a direction opposite to the jaws (21, 22), between the base (11) and a free edge (31), the fixing extension (30) including a receiving groove (32) configured to receive and block a portion of the filamentary support (200,201), **characterized in that** the fixing extension (30) includes, on one hand, an appendage (33, 34) projecting from the base (11) and arranged at a junction between the clamp (20) and the fixing extension (30), and on the other hand, a locking tab (35) extending according to a direction parallel to the appendage (33, 34), the appendage (33, 34) and the locking tab (35) forming the receiving groove (32),
and **in that** the appendage (33, 34) includes a first wall (330, 340) forming the receiving groove (32) which presents a convex profile curvature according to at least one axis.

2. The device for fixing (10) according to claim 1, wherein the appendage (33, 34) includes a second wall (332, 342) which presents a concave profile extending an internal wall (25) of the clamp (20).

3. The device for fixing (10) according to any one of claims 1 and 2, wherein the locking tab (35) extends longitudinally from a base (350) integral with the fixing extension (30) to a free end (351), the locking tab (35) has a cylindrical body which presents at least a portion the cross section of which decreases in the direction of the free end (351).

4. The device for fixing (10) according to claim 3, wherein the fixing extension (30) comprises a receptacle (36) receiving the base (350) of the locking tab (35), on one hand, the receptacle (36) is equipped with a bayonet receiver that comprises an anti-release system, and on the other hand, the base (350) of the locking tab (35) which is equipped with two lugs (353) configured to cooperate with the bayonet receiver.

5. The device for fixing (10) according to any one of claims 1 to 4, wherein the receiving groove (32) presents a V-shaped cross section.

6. The device for fixing (10) according to any one of claims 1 to 5, which includes a reinforcement structure (28) for each jaw (21, 22).

7. The device for fixing (10) according to any one of claims 1 to 6, wherein each jaw (21, 22) comprises at least one blocking shoulder (29) to block the clamp (20) in a fixed position on the irrigation cane (100).

8. A tree crop irrigation system including:
- a determined number of sprinklers arranged overhanging the treetops of the tree crop,
- a determined number of irrigation canes (100), each irrigation cane (100) raises a sprinkler above the treetops, and
- a determined number of devices for fixing (10) defined according to any one of claims 1 to 7, each device for fixing (10) allows an irrigation cane (100) to be secured to at least one filamentary support (200,201) such as a wire or a ring itself secured to a crop stake.

9. A method for irrigating tree crops comprising the following steps:
- Raising a determined number of sprinklers overhanging the treetops, each sprinkler being raised by an irrigation cane (100), and
- Securing the irrigation canes (100) to at least one filamentary support (200,201) such as a wire or a ring secured to a stake, each irrigation cane (100) being secured to at least one filamentary support (200,201) by a determined number of devices for fixing (10) defined according to any one of claims 1 to 7.
